# EUROPÄISCHE PATENTSCHRIFT

(11) **EP 2 054 227 B1**
(45) Veröffentlichungstag und Bekanntmachung des Hinweises auf die Patenterteilung: **28.04.2010**
(21) Anmeldenummer: 07786542.6
(22) Anmeldetag: 03.08.2007
(51) Int. Cl.: C25D 5/02, C25D 5/56, C25D 7/00, B29C 45/00, B29C 45/16, B32B 27/08, B32B 27/28, B32B 27/32

(54) **VERFAHREN ZUR HERSTELLUNG EINES VERBUNDERZEUGNISSES MIT SELEKTIVER GALVANISIERUNG**
METHOD FOR THE PRODUCTION OF A COMPOSITE PRODUCT WITH SELECTIVE ELECTROPLATING
PROCÉDÉ DE FABRICATION D'UN PRODUIT COMPOSITE PAR GALVANISATION SÉLECTIVE

(30) Priorität: 10.08.2006 DE 102006037534; 10.08.2006 DE 102006037535
(43) Veröffentlichungstag der Anmeldung: 06.05.2009
(73) Patentinhaber: Braun GmbH, 61476 Kronberg (DE)
(72) Erfinder: GÖRICH, Gerald, 64331 Weiterstadt (DE); GRAF, Sebastian, 65824 Schwalbach (DE); KOPPLER, Dagmar, 91541 Rothenburg o.d.T. (DE); GEHRINGER, Manuela, 97215 Auernhofen (DE)
(86) Internationale Anmeldenummer: PCT/EP2007/006874
(87) Internationale Veröffentlichungsnummer: WO 2008/017423

(56) Entgegenhaltungen:
- EP-A- 0 832 931
- EP-A- 0 878 505
- EP-A- 1 225 036
- WO-A-2005/100471
- DE-A1- 4 432 966
- DE-A1- 19 516 540
- DE-A1- 19 517 338
- DE-A1- 19 645 727
- US-A1- 2004 005 473
- US-A1- 2004 151 933
- DATABASE WPI Week 198448 Derwent Publications Ltd., London, GB; AN 1984-297425 XP002469733 -& JP 59 184228 A (SUMITOMO BAKELITE CO) 19. Oktober 1984 (1984-10-19)

## Beschreibung

Die Erfindung betrifft ein Verfahren zur Herstellung eines Verbunderzeugnisses aus einem Hartkunststoffbauteil und einem Weichkunststoffbauteil mit selektiver Galvanisierung.

Bisher war es nicht möglich, Hart-/Weichkunststoffverbunderzeugnisse mit handelsüblichen thermoplastischen Elastomeren (TPE) als Weichkomponente selektiv zu galvanisieren.

Es werden deshalb im Stand der Technik zwei grundsätzlich unterschiedliche Verfahren eingesetzt, um dekorative partiell galvanisierte Bauteile oder Mehrkomponentenbauteile mit dekorativer Galvanisierung herzustellen.

Beim ersten Verfahren werden die Hartkunststoffbauteile gespritzt, galvanisiert und mit TPE umspritzt. Dieses Verfahren wird beispielsweise zur Herstellung von Seitenblenden für Elektrorasierer eingesetzt.

Nachteilig ist, dass es sich hierbei um ein sehr aufwändiges Verfahren handelt, da die Werkzeuge und der gesamte Prozess nur sehr geringe Toleranzen zulassen. Darüber hinaus fallen bei diesem Verfahren nicht unerhebliche Ausschussraten an. Ferner handelt es sich beim Galvanisieren um einen Freiflächenprozess, bei dem die Schichtdicken u.a. von dem Platz auf dem Galvanogestell abhängig sind. Durch die prozessbedingten Schichtdickenschwankungen ist eine aufwändige Verfahrensführung und Kontrolle notwendig.

Weiterhin wird als nachteilig angesehen, dass bei den verschiedenen Prozessschritten ein hoher Anteil an manuellen Tätigkeiten notwendig ist.

Darüber hinaus ist es nachteilig, dass die Verbindung zwischen dem galvanisierten Bauteil und dem Weichkunststoffbauteil nur formschlüssig erfolgt und so keine Dichtigkeit zwischen den Bauteilen erreicht wird. Ist eine entsprechende Abdichtung erforderlich, ist dies nur durch eine aufwändigere Gerätekonzeption und mit zusätzlichen Dichtelementen zu erreichen.

Bei dem zweiten Verfahren wird eine aufwändigere Teilekonstruktion in Kauf genommen, um die Anzahl der Prozessschritte, wie sie im ersten Verfahren beschrieben werden, zu verringern und die Gerätekonstruktion zu vereinfachen. Aus diesem Grund müssen die Bauteile beispielsweise mit einer aufwändigen Abdichtkante aus einem nichtgalvanisierten Kunststoff versehen werden. Dadurch soll eine Beschädigung der galvanisierten Schicht beim Schließen des Werkzeugs verhindert werden.

Nachteilig ist, dass ein Dreikomponenten-Spritzgussteil erforderlich ist, was mit erhöhten Investitionen verbunden ist.

Aus der DE-A 195 16 540 ist ein Verfahren zur Herstellung eines Verbunderzeugnisses mit selektiver Galvanisierung bekannt, wobei ein erster galvanisierbarer und ein zweiter nicht galvanisierbarer Kunststoff verwendet wird. Hierdurch ist die Werkstoffauswahl stark eingeschränkt.

Ein ähnliches Verfahren ist auch aus der DE-A 195 17 338 bekannt. Demnach wird ein metallisierbares erstes Polymerteil teilweise mit einem nicht metallisierbaren Polymer überzogen und der freie Bereich des ersten Polymerteils wird anschließend metallisiert.

Gemäß der Erfindung soll ein Verfahren zur Herstellung eines Verbunderzeugnisses mit selektiver Galvanisierung aus einem Hartkunststoffbauteil und einem Weichkunststoffbauteil bereitgestellt werden, bei dem die Nachteile des Standes der Technik überwunden werden.

Dies wird überraschenderweise durch ein Verfahren zur Herstellung eines Verbunderzeugnisses mit selektiver Galvanisierung aus einem Hartkunststoffbauteil und einem Weichkunststoffbauteil erreicht, wobei das Verfahren dadurch gekennzeichnet ist, dass zur Herstellung des Weichkunststoffbauteils ein Thermoplast aus styrolbasierendem Elastomer und Polyolefin eingesetzt wird und dass das Verfahren die Schritte a) Erstellen einer Spritzgussform für das Verbunderzeugnis, b) Spritzen des Verbunderzeugnisses und c) selektives Galvanisieren des Verbunderzeugnisses umfasst.

In einer bevorzugten Ausführungsform der Erfindung werden als weitere Verfahrensschritte nach dem Spritzen und nach dem Galvanisieren Ausschusskontrollen durchgeführt. Durch den Einsatz des Thermoplasten aus styrolbasierendem Elastomer und Polyolefin zur Herstellung des Weichkunststoffbauteils konnte das folgende Verfahren realisiert werden. Zur Verdeutlichung der besonderen Vorteilhaftigkeit des erfindungsgemäßen Verfahrens wird parallel dazu das oben als erstes genannte Verfahren dargestellt.

| | |
|---|---|
| Erfindungsgemäßes Verfahren | Verfahren nach dem Stand der Technik |
| Erstellen einer Spritzgussform für das Verbunderzeugnis | Erstellen einer Spritzgussform für das Hartkunststoffbauteil |
| 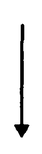 | ↓ |
| | Erstellen einer Spritzgussform für das Weichkunststoffbauteil |
| | ↓ |
| Spritzen des Verbunderzeugnisses | Spritzen des Hartkunststoffbauteils |
| ↓ | |
| Ausschusskontrolle des Verbunderzeugnisses | Ausschusskontrolle des Hartkunststoffbauteils |
| ↓ | ↓ |
| selektives Galvanisieren des Verbunderzeugnisses | Galvanisieren des Hartkunststoffbauteils |
| ↓ | ↓ |
| Ausschusskontrolle des galvanisierten Verbunderzeugnisses | Ausschusskontrolle des galvanisierten Hartkunststoffbauteils |
| | ↓ |
| | nestbezogenes Einlegen des Hartkunststoffbauteils |
| | ↓ |
| | Spritzgießen des Weichkunststoffbauteils |
| | ↓ |
| | Ausschusskontrolle des galvanisierten Verbunderzeugnisses |

Neben dem gegenüber dem Stand der Technik um mehrere Verfahrensschritte verkürzten erfindungsgemäßen Verfahren liegt ein weiterer Vorteil vorliegender Erfindung darin, dass die einzelnen Bauteile nicht mechanisch sondern stoffschlüssig miteinander verbunden sind. Hierbei kann es sich einerseits auch um mehrere Hartkunststoffbauteile und andererseits auch um mehrere Weichkunststoffbauteile handeln.

Durch den erfindungsgemäßen Einsatz des Thermoplasten aus styrolbasierendem Elastomer und Polyolefin wird die selektive Galvanisierung des Hartkunststoffbauteils oder der Hartkunststoffbauteile möglich, weil der Thermoplast gegenüber Chromschwefelsäure resistent ist.

Das Verbunderzeugnis kann also nahezu im Standardverfahren gefertigt und anschließend galvanisiert werden.

Der Thermoplast aus styrolbasierendem Elastomer und Polyolefin kann ein Polystyrolpoly(ethylen/butylen)-polystyrol (SEBS) sein, das einen Seitenkettenanteil von über 60% aufweist. Damit ist ein hoher amorpher Anteil im Weichsegment des Thermoplasts gegeben. Entsprechende Thermoplasten werden unter den Handelsbezeichnungen Kraton^{®} MD 6932, Kraton^{®} RP 6924 oder Septon^{®} 2063 in Kombination mit Polypropylen vertrieben.

Übliche Weichmacher und Füllstoffe können bei der Herstellung des Weichkunststoffbauteils dem Thermoplasten zugesetzt werden.

Vorzugsweise weist der zur Herstellung des Weichkunststoffbauteils eingesetzte Thermoplast aus styrolbasierendem Elastomer einen kristallinen Anteil von höchstens 20 Gew.-% des Elastomers auf.

Als Hartkunststoff wird vorzugsweise ein polarer amorpher technischer Thermoplast eingesetzt. Hierbei ist besonders bevorzugt ein Acrylnitril-Butadien-Styrol-Copolymer (ABS) oder ABS-Blends. Diese sind gut galvanisierbar.

Zur Galvanisierung eignen sich am besten klassische Galvanoverfahren für ABS mit einer Chromschwefelsäure-Aktivierung und zwar sowohl ionogene als auch kolloidale Verfahren.

Zur Kunststoffmetallisierung wird auf das Handbuch Kunststoff-Metallisierung, Leuze Verlag, Saulgau/Württemberg, 1991, verwiesen.

In einer weiteren bevorzugten Ausführungsform der Erfindung ist das Verfahren **dadurch gekennzeichnet, dass** das Hartkunststoffbauteil mit dem Thermoplast aus styrolbasierendem Elastomer und Polyolefin überspritzt wird.

Des Weiteren ist ein Verfahren bevorzugt, das dadurch gekennzeichnet ist, dass der Thermoplast aus styrolbasierendem Elastomer und Polyolefin mit Metalleffektflitter eingefärbt wird.

In einer anderen bevorzugten Ausführungsform ist das Verfahren **dadurch gekennzeichnet, dass** das Hartkunststoffbauteil bedruckt wird.

Anwendungsgebiete für die durch das erfindungsgemäße Verfahren hergestellten Verbunderzeugnisse sind beispielsweise Rasierer, Schutz von Galvanogestellen, Verpackungen oder Flakons.

Des Weiteren ergeben sich neue Möglichkeiten für Designer durch die Transparenz der Hart- und Weichkunststoffbauteile verbunden mit speziellen Lichteffekten.

Besonders außergewöhnliche Effekte sind zu erreichen, indem das Hartkunststoffbauteil, das galvanisierbar ist, eingefärbt wird und mit dem Weichkunststoffbauteil, das nicht galvanisierbar ist, überspritzt wird. Nach der partiellen Galvanisierung ist nur im Bereich des transparenten Weichmaterials die Untergrundfarbe sichtbar.

Weiter können besondere Effekte dadurch erzielt werden, dass das transparente Weichkunststoffbauteil mit Metalleffektflittern eingefärbt wird und einen farbigen Hintergrund zur Tiefenwirlung aufweist oder der zu überspritzende Bereich partiell dekoriert, beispielsweise bedruckt, wird.

Ferner ist es nunmehr möglich, durch eine entsprechende Gestaltung der Geometrie des Weichkunststoffbauteils Partien der Formteiloberfläche durch Abschirmung der Oberflächenleitung im Galvanobad frei von metallischer Beschichtung zu halten und so weitere Farbeffekte zu erzielen.

Das erfindungsgemäße Verfahren zur Herstellung eines Verbunderzeugnisses mit selektiver Galvanisierung und dessen geschilderte Vorteile werden im Folgenden anhand der Figuren näher erläutert.

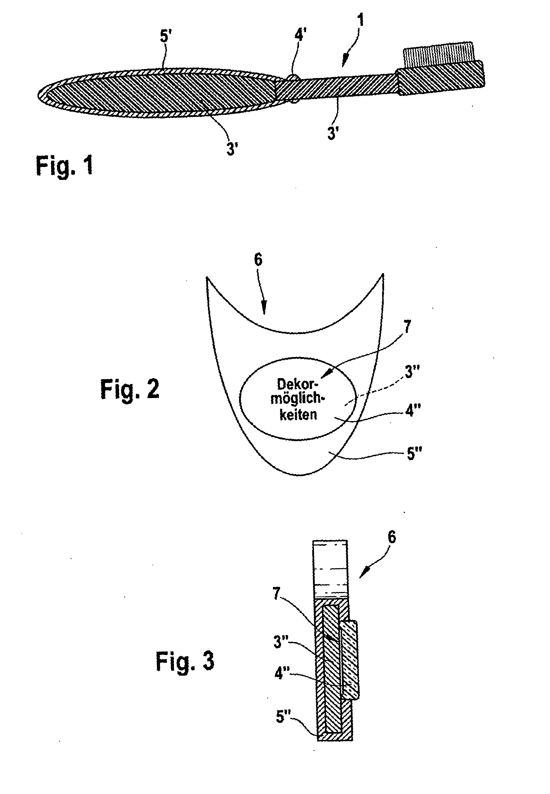

Fig. 1 zeigt als ein gemäß dem erfindungsgemäßen Verfahren hergestelltes Verbunderzeugnis eine Zahnbürste 1.

Die Zahnbürste 1 weist einen Griff und eine Bürstenkopf auf. Beide sind durch einen Bürstenhals miteinander verbunden. Zusammen stellen sie das Hartkunststoffbauteil 3' dar. Das Hartkunststoffbauteil 3' kann transparent bis farbig sein.

Der Griff ist mit der Galvanoschicht 5' ummantelt.

Der Griff wird durch das isolierend wirkende Weichkunststoffbauteil 4' vom Bürstenhals optisch getrennt. Dies führt bei einer Zweikomponenten-Spritzgussanwendung zu einer Dreikomponenten-Optik.

Fig. 2 zeigt ein Dekorverbunderzeugnis 6 in der Draufsicht.

Auf dem Dekorerzeugnis 6, das einen farbigen Träger als Hartkunststoffbauteil 3" aufweist, wird ein Aufdruck oder eine Prägung 7 aufgebracht. Der Aufdruck oder die Prägung 7 sind mit dem transparenten Weichkunststoffbauteil 4" überspritzt.

Der nicht überspritzte Bereich des Hartkunststoffbauteils 3" ist von der Galvanoschicht 5" bedeckt.

Fig. 3 zeigt das Dekorverbunderzeugnis 6 der Fig. 2 in der Seitenansicht.

Fig. 4 zeigt eine Schraubkappe oder Deckel 8 in der Schrägsicht.

Hierbei wird die Schraubkappe oder der Deckel 8 von einem ringförmigen Weichkunststoffbauteil 4"' etwa mittig umgeben. Das Weichkunststoffbauteil 4"' ist transparent bis farbig und wirkt isolierend. Das Hartkunststoffbauteil 3"' dient als Trägermaterial und ist farbig gestaltet. Auf dem Hartkunststoffbauteil 3"' ist die Galvanoschicht 5"' aufgebracht, mit Ausnahme des Bereichs, an dem sich das ringförmige Weichkunststoffbauteil 4"' befindet.

Die Schraubkappe oder der Deckel 8 sind Zweikomponenten-Spritzgusserzeugnisse, die eine Dreikomponenten-Optik liefern.

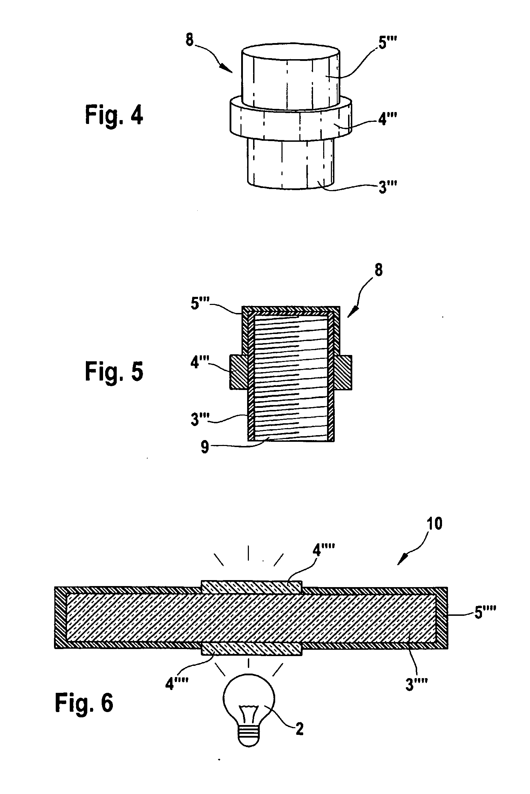

Fig. 5 zeigt die Schraubkappe oder den Deckel 8 der Fig. 4 in einer Schnittansicht.

Für die Alternative, Schraubkappe, ist ein Gewinde 9 dargestellt.

Fig. 6 zeigt einen Schalter oder Display 10 in der Seitenansicht.

Hierbei bildet das Hartkunststoffbauteil 3"" das transparente Trägermaterial. Mittig ist dies sowohl an seiner Oberseite als auch an seiner Unterseite von dem transparenten Weichkunststoffbauteil 4"" überspritzt. Die übrige Oberfläche des Hartkunststoffbauteils 3"" ist mit der Galvanoschicht 5"" versehen.

Unterhalb des Schalters oder Displays 10 befindet sich ein Leuchtmittel 2. Durch die Transparenz sowohl des Hartkunststoffbauteils 3"" als auch des Weichkunststoffbauteils 4"" können sich somit besondere optische Effekte an der Oberseite des Schalters oder Displays 10 ergeben.

## Patentansprüche

1. Verfahren zur Herstellung eines Verbunderzeugnisses mit selektiver Galvanisierung aus einem Hartkunststoffbauteil und einem Weichkunststoffbauteil, **dadurch gekennzeichnet, dass** zur Herstellung des Weichkunststoffbauteils ein Thermoplast aus styrolbasierendem Elastomer und Polyolefin eingesetzt wird und dass das Verfahren die Schritte
a) Erstellen einer Spritzgussform für das Verbunderzeugnis,
b) Spritzen des Verbunderzeugnisses und
c) selektives Galvanisieren des Verbunderzeugnisses umfasst.

2. Verfahren nach Anspruch 1, **dadurch gekennzeichnet, dass** als weitere Verfahrensschritte nach dem Spritzen und nach dem Galvanisieren eine Ausschusskontrolle durchgeführt wird.

3. Verfahren nach Anspruch 1 oder 2, **dadurch gekennzeichnet, dass** das Hartkunststoffbauteil mit dem Thermoplast aus styrolbasierendem Elastomer und Polyolefin überspritzt wird.

4. Verfahren nach einem der vorhergehenden Ansprüche, **dadurch gekennzeichnet, dass** der Thermoplast aus styrolbasierendem Elastomer und Polyolefin mit Metalleffektflitter eingefärbt wird.

5. Verfahren nach einem der vorhergehenden Ansprüche, **dadurch gekennzeichnet, dass** das Hartkunststoffbauteil bedruckt wird.

6. Verfahren nach einem der vorhergehenden Ansprüche, **dadurch gekennzeichnet, dass** als Hartkunststoff ein polarer amorpher technischer Thermoplast eingesetzt wird.

7. Verfahren nach Anspruch 6, **dadurch gekennzeichnet, dass** als Hartkunststoff ein Acrylnitril-Butadien-Styrol-Copolymer eingesetzt wird.

8. Verfahren nach einem der vorhergehenden Ansprüche, **dadurch gekennzeichnet, dass** der Thermoplast aus styrolbasierendem Elastomer einen kristallinen Anteil von höchstens 20 Gew.-% des Elastomers aufweist.

9. Verfahren nach einem der vorhergehenden Ansprüche, **dadurch gekennzeichnet, dass** zur Herstellung des Weichkunststoffbauteils ein Polystyrol-poly(ethylen/ butylen)-polystyrol mit einem Seitenkettenanteil von über 60% eingesetzt wird.

## Claims

1. A method for manufacturing a composite article having selective electroplating from a hard plastic part and a soft plastic part, **characterized in that** a thermoplastic composed of a styrene-based elastomer and polyolefin is used in the manufacture of the soft plastic part and **in that** the method comprises the steps of
a) creating an injection mold for the composite article,
b) injection molding the composite article, and
c) selective electroplating of the composite article.

2. The method according to Claim 1, **characterized in that** a reject inspection is conducted as a further method step subsequent to injection molding and electroplating.

3. The method according to Claim 1 or Claim 2, **characterized in that** the hard plastic part is overmolded with the thermoplastic composed of a styrene-based elastomer and polyolefin.

4. The method according to any of the preceding claims, **characterized in that** the thermoplastic composed of a styrene-based elastomer and polyolefin is colored with metallic-based flakes.

5. The method according to any of the preceding claims, **characterized in that** the hard plastic part is imprinted.

6. The method according to any of the preceding claims, **characterized in that** a polar amorphous technical thermoplastic is used as the hard plastic.

7. The method according to Claim 6, **characterized in that** an acrylonitrile-butadiene-styrene copolymer is used as the hard plastic.

8. The method according to any of the preceding claims, **characterized in that** the thermoplastic composed of a styrene-based elastomer has a maximum crystalline proportion of 20% by weight of the elastomer.

9. The method according to any of the preceding claims, **characterized in that** a polystyrene-poly(ethylene/butylene)-polystyrene having a side chain portion of more than 60% is used for the manufacture of the soft plastic part.

## Revendications

1. Procédé de fabrication d'un produit composite constitué d'un élément en matière plastique dure et d'un élément en matière plastique souple avec une galvanisation sélective, **caractérisé en ce qu'**une matière thermoplastique constituée d'un élastomère à base de styrène et d'une polyoléfine est utilisée pour la fabrication de l'élément en matière plastique souple et le procédé comprend les étapes consistant à :
a) produire un moule de moulage par injection pour le produit composite,
b) injecter le produit composite et
c) galvaniser de manière sélective le produit composite.

2. Procédé selon la revendication 1, **caractérisé en ce qu'**un contrôle de qualité est mis en oeuvre en tant qu'étape de procédé supplémentaire après l'injection et après la galvanisation.

3. Procédé selon la revendication 1 ou 2, **caractérisé en ce que** l'élément en matière plastique dure est recouvert par injection avec la matière thermoplastique constituée d'un élastomère à base de styrène et d'une polyoléfine.

4. Procédé selon l'une quelconque des revendications précédentes, **caractérisé en ce que** la matière thermoplastique constituée d'un élastomère à base de styrène et d'une polyoléfine est colorée avec des paillettes métallisées.

5. Procédé selon l'une quelconque des revendications précédentes, **caractérisé en ce que** l'élément en matière plastique dure est imprimé.

6. Procédé selon l'une quelconque des revendications précédentes, **caractérisé en ce qu'**une matière thermoplastique technique amorphe polaire est utilisée en tant que matière plastique dure.

7. Procédé selon la revendication 6, **caractérisé en ce qu'**un copolymère acrylonitrile-butadiène-styrène est utilisé en tant que matière plastique dure.

8. Procédé selon l'une quelconque des revendications précédentes, **caractérisé en ce que** la matière thermoplastique constituée d'un élastomère à base de styrène présente une part cristalline d'au plus 20 % en poids de l'élastomère.

9. Procédé selon l'une quelconque des revendications précédentes, **caractérisé en ce qu'**un polystyrène-poly(éthylène/butylène)-polystyrène avec une proportion de chaînes latérales supérieure à 60 % est utilisé pour la fabrication de l'élément en matière plastique souple.
